# EUROPEAN PATENT SPECIFICATION

(11) **EP 3 006 235 B1**
(45) Date of publication and mention of the grant of the patent: **18.04.2018**
(21) Application number: 14804233.6
(22) Date of filing: 24.04.2014
(51) Int. Cl.: B60C 27/06, B60C 27/12

(54) **TIRE SLIP PREVENTION WIRE TENSIONING DEVICE**
DRAHTSPANNVORRICHTUNG ZUR REIFENRUTSCHVERHINDERUNG
DISPOSITIF DE TENSION DE FIL POUR PRÉVENIR UN GLISSEMENT DE PNEUMATIQUE

(30) Priority: 29.05.2013 JP 2013112454
(43) Date of publication of application: 13.04.2016
(73) Proprietor: Car Mate Mfg. Co., Ltd., Toshima-ku Tokyo 171-0051 (JP); Tanabe, Shigeru, Tokyo 171-0051 (JP)
(72) Inventor: TANABE, Shigeru, Tokyo 171-0051 (JP)
(74) Representative: Sloboshanin, Sergej
(86) International application number: PCT/JP2014/002322
(87) International publication number: WO 2014/192222

(56) References cited:
- EP-A1- 1 536 955
- EP-A2- 1 839 915
- JP-A- S6 478 904
- JP-A- H06 127 224
- JP-A- 2012 081 959
- JP-U- 3 143 006
- JP-U- 3 143 006

## Description

### Technical Field

The present invention relates to a wire tensioning device, which is used to prevent tire slip, and which is used when fixing a tire slip prevention device to a land vehicle tire so that the tire slip prevention device is tightly fixed to the tire, primarily by contracting the length of the tire slip prevention device in the circumferential direction of the tire by contracting the length of a wire that is drawn out from the wire tensioning device.

### Background Art

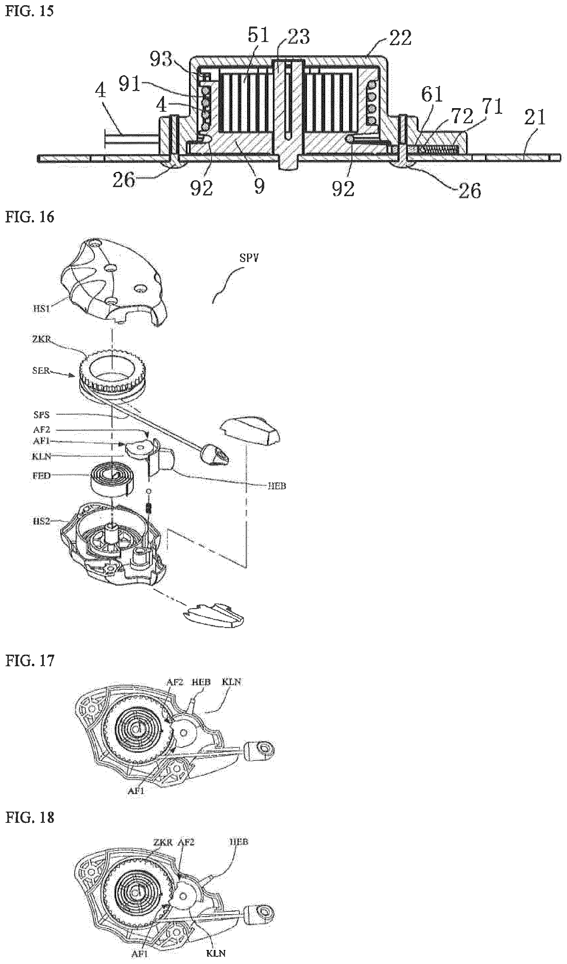

As a conventional structure of a tire slip prevention wire tensioning device, Japanese Patent Publication No. 4384194 discloses, as shown in FIG. 16 to FIG. 18 attached herewith, a tensioning device for a slip stopper chain (SPV), which has a housing (HS1 and HS2), and an operation member (HEB), providing at least two fixing locations for a tension rope (SPS) that can be drawn in the housing through a housing opening and that is connected to a wind-up roller (SER), preliminarily tensioned in the winding direction by means of a spring FED in the housing and supported about its axis in a rotatable manner, in which the motion of the tension rope in the tension direction can be prevented in the first fixing location shown in FIG. 17 and likewise the motion against the tension direction can be prevented in the second fixing location shown in FIG. 18, and in which, furthermore, the wind-up roller is provided with a toothed rim (ZKR) having a fixing claw (KLN), and, in this device, the fixing claw (KLN) can move between two terminal-end locations corresponding to the fixing locations by means of the operation member (HEB), and also meshes with the toothed rim via at least one abutting plane (AF1 or AF2) in each terminal-end location, and, when this takes place, at least one abutting plane supports at least one toothed side plane of the toothed rim, and prevents the motion of the toothed rim in the direction of this toothed side plane, and the abutting planes corresponding to different terminal-end locations each perform a joint task with differently-directed toothed side planes.

However, since Japanese Patent Publication No. 4384194 provides a structure that operates to switch the location where the fixing claw (KLN) meshes with the toothed rim (ZKR) of the wind-up roller (SER), by operating the operation member (HEB), between two fixing locations including the first fixing location where the motion of the tension rope in the tension direction is prevented and a second fixing location where motion against the tension direction is prevented, when in use, after the location where the fixing claw (KLN) meshes with the toothed rim (ZKR) of the wind-up roller (SER) is moved to the first fixing location to prevent the motion of the tension rope in the tension direction by operating the operation member (HEB), and the task of placing the tire slip prevention device on the tire is finished, the location where the fixing claw (KLN) meshes with the toothed rim (ZKR) of the wind-up roller (SER) must be moved to the second fixing location to prevent motion against the tension direction by operating the operation member (HEB), and, if this operation is forgotten or the user operates the operation member (HEB) in the wrong direction, the wire is drawn out by centrifugal force while the car is running, which may lead to an accident in which the tire slip prevention device disengages and drops.

Also, when a third party tampers with the operation member (HEB) or the operation member (HEB) moves due to a collision with an external object such as snow during drive, and the location where the fixing claw (KLN) meshes with the toothed rim (ZKR) of the wind-up roller (SER) moves to the first fixing location where the motion of the tension rope in the tension direction is prevented, there is a threat that the wire is drawn out from the wire tensioning device by centrifugal force while the car is running, which may lead to an accident in which the tire slip prevention device disengages and drops.

### Related Art Document

### Patent Document

Patent Literature 1: Japanese Patent Publication No. 4384194

### Disclosure of the Invention

### Problems to be Solved by the Invention

It is therefore an object of the present invention to provide a tire slip prevention wire tensioning device that, even in the event of malfunction due to wrong operation of the operation member of the tire slip prevention wire tensioning device, forgotten operation, tampering, a collision with an external object, and so on, can prevent the situation where the wire is drawn out from the wire tensioning device by centrifugal force while the car is running and the tire slip prevention device disengages and drops from the tire.

### Means for Solving the Problem

The tire slip prevention wire tensioning device of the present invention is a wire tensioning device to allow a slip prevention body to closely fit a vehicle tire, the slip prevention body being placed on the tire along an outer circumference of the tire, and this wire tensioning device has a case, a wheel which is supported about an axis in the case and which can wind up a wire, the wire, one end of which is fixed to the wheel, a winding biasing means which applies bias to the wheel in a direction to wind the wire, and a control mechanism which controls rotating motion of the wheel, the control mechanism has a plurality of tooth parts which are formed on the wheel, a first locking tooth which engages with the tooth parts and prevents the wheel from rotating in a direction to release the wire, a second locking tooth which engages with the tooth parts and prevents the wheel from rotating in the direction to wind the wire, and biasing means which applies bias to a locking tooth, which is at least one of the first locking tooth or the second locking tooth, towards the tooth parts formed on the wheel, and the control mechanism is further structured so that when the first locking tooth engages with the tooth parts formed on the wheel, the state in which the second locking tooth is engaged is cancelled, and, when the second locking tooth engages with the tooth parts, the state in which the first locking tooth is engaged is cancelled, and a first motion for switching from the state in which the second locking tooth is engaged with the tooth parts formed on the wheel to the state in which the first locking tooth is engaged is carried out by a motion to draw out the wire wound around the wheel.

Furthermore, a second motion for switching from the state in which the first locking tooth is engaged with the tooth parts formed on the wheel to the state in which no engaging tooth, neither the first engaging tooth nor the second locking tooth, is engaged can be carried out by operating a manual operation part that sticks out from the case of the wire tensioning device.

Furthermore, a third motion for switching from the state in which no engaging tooth, neither the first engaging tooth nor the second locking tooth, is engaged with the tooth parts formed on the wheel to the state in which the second locking tooth is engaged can be carried out by operating the manual operation part that sticks out from the case of the wire tensioning device.

Furthermore, the control mechanism has a movable piece, in which the first locking tooth is arranged at one end of one side plane and the second locking tooth is formed at the other end of the one side, an axis support part with the case is formed on the movable piece in a location between the first locking tooth and the second locking tooth, an abutting part with the biasing means is further formed on the other side plane of the movable piece, and a closest point of approach, which approaches the closest to the biasing means, is formed on the abutting part formed on the other side plane of the movable piece, in a location between the first locking tooth and the second locking tooth.

Furthermore, the biasing means is structured so that an elastic member is arranged in a nearly vertical direction with respect to an axis of rotation of the movable piece, and the direction of rotation of the movable piece switches to an opposite direction, at the closest point of approach of the location where the elastic member applies bias to the movable piece as a border.

Furthermore, in the elastic member, a sliding member is arranged in the abutting part with the movable piece.

Furthermore, in the control mechanism, the manual operation part is provided in the movable piece to be closer to the second locking tooth, and the location of the closest point of approach of the abutting part formed on the other side plane of the movable piece is formed in a location that is shifted more towards the first locking tooth than the location of the axis support part.

Furthermore, the case is fixed to an outer end part of the tire slip prevention and a connecting part to connect with a component of the tire slip prevention is provided at the other end of the wire.

Note that the wire-winding torque of the wheel increases more in a state in which the amount of wire wound around the wheel is larger than in a state in which the amount of wire wound is smaller.

### Effects of the Invention

With the tire slip prevention wire tensioning device of the present invention, even in the event of malfunction due to wrong operation of the operation member, forgotten operation, tampering, a collision with an external object, and so on, the state in which the wire is drawn out from the wire tensioning device by centrifugal force while the car is running does not last and automatically switches to the wire winding state, thereby bringing about a clear advantage of preventing the tire slip prevention device from disengaging and dropping from the tire, keeping the wire in constant tension during drive and fixing the tire slip prevention to the tire firmly.

### Brief Description of Drawings

FIG. 1 is an exploded view of a first embodiment of the present invention;
FIG. 2 is a cross-sectional view of the first embodiment of the present invention;
FIG. 3 is a perspective view of the first embodiment of the present invention;
FIG. 4 is a front view of the first embodiment of the present invention;
FIG. 5 is a side view of the first embodiment of the present invention;
FIG. 6 is a rear view of the first embodiment of the present invention;
FIG. 7 is a front view to show an example of placing the tire slip prevention of the first embodiment of the present invention;
FIG. 8 is an enlarged view to show essential parts in a wire fixing part according to the first embodiment of the present invention;
FIG. 9 is a reference view to show the state in which the second locking tooth is engaged with the tooth parts, according to the first embodiment of the present invention;
FIG. 10 is a reference view to show an intermediate stage of a first motion for switching from the state in which the second locking tooth is engaged with the tooth parts, to the state in which the first locking tooth is engaged, according to the first embodiment of the present invention;
FIG. 11 is a reference view to show the state in which the first locking tooth is engaged with the tooth parts, according to the first embodiment of the present invention;
FIG. 12 is a reference view to show a state by a second motion, in which neither the first locking tooth nor the second locking tooth, is engaged with the tooth parts, according to the first embodiment of the present invention;
FIG. 13 is a reference view to show a third motion for switching to the state in which the second locking tooth is engaged with the tooth parts, according to the first embodiment of the present invention;
FIG. 14 is a cross-sectional view of a second embodiment of the present invention;
FIG. 15 is a cross-sectional view of a variation of the second embodiment of the present invention;
FIG. 16 is an exploded view to show prior art;
FIG. 17 is a reference view to show the state of the first fixing location according to prior art; and
FIG. 18 is a reference view to show the state of the second fixing location according to prior art.

### Description of Embodiments

Now, embodiments of the present invention will be described below in detail with reference to the accompanying drawings.

### [Embodiment 1]

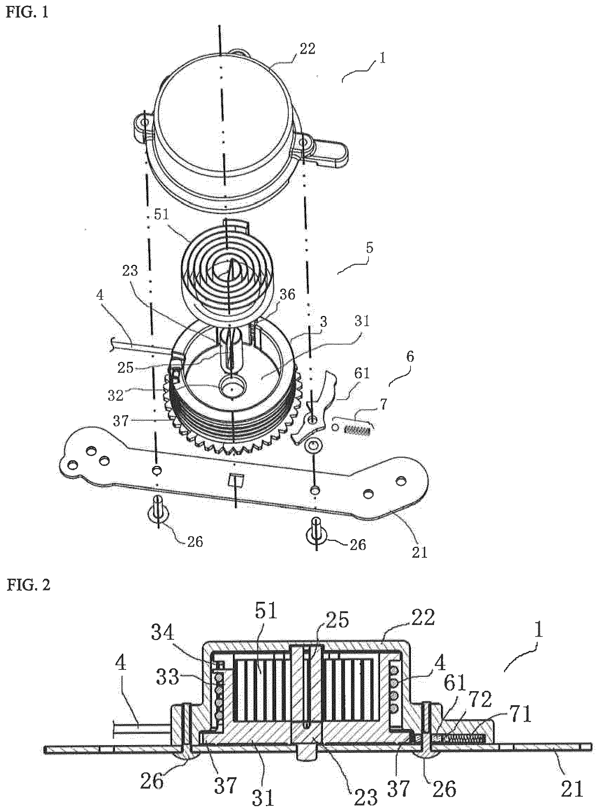

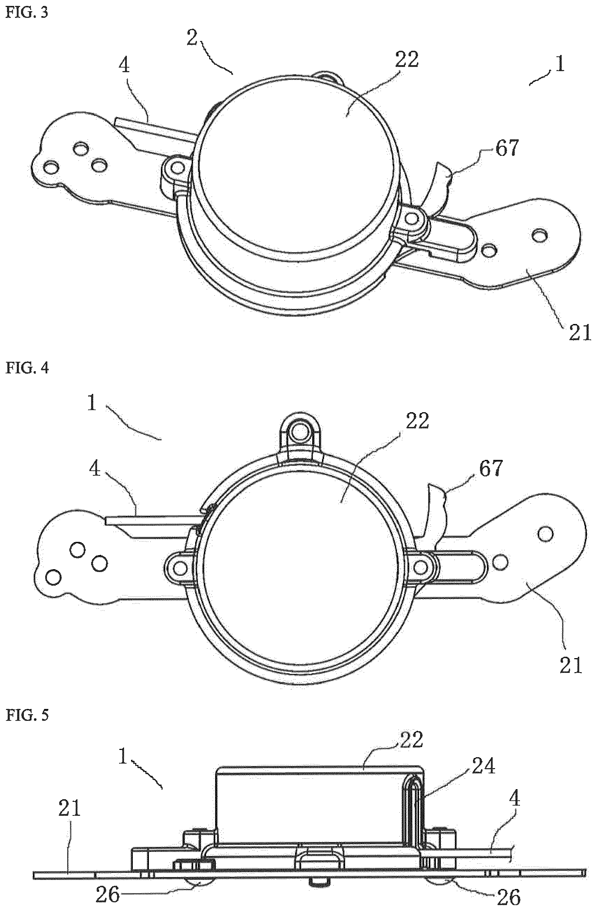

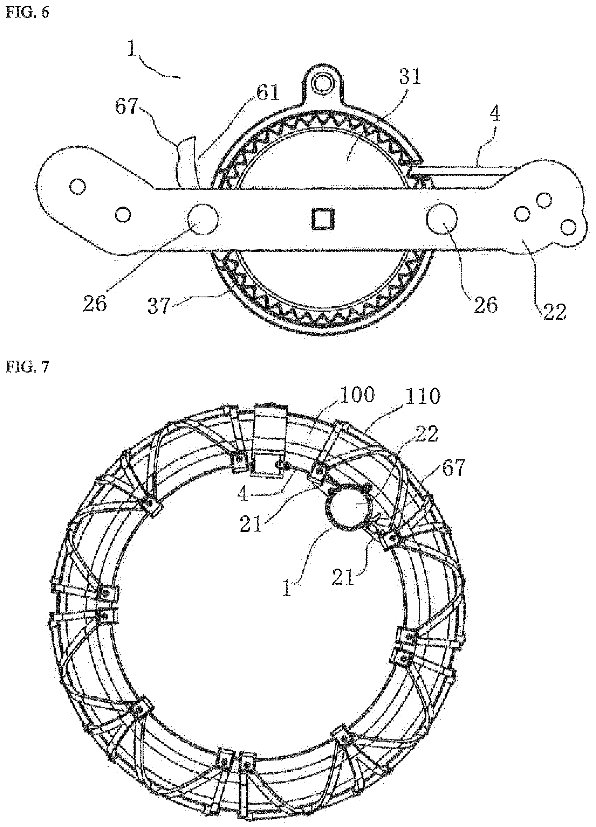

FIG. 1 to FIG. 7 are diagrams, each showing an example of a preferable embodiment of the present invention, where the slip prevention wire tensioning device of a first embodiment of the present invention is a wire tensioning device 1 to allow a slip prevention body 110, which is placed on a vehicle tire 100 along the outer circumference, to closely fit the tire 100, and has a case 2, a wheel 3 that is supported about an axis in the case 2 and that can wind up the wire 4, a winding biasing means 5 that applies bias to the wheel 3 in the direction to wind the wire 4, and a control mechanism 6 that controls the rotating motion of the wheel 3.

The case 2 is formed with a base plate 21, in which a connecting part with an outer end part of the slip prevention body 110 is formed on an end part, and a cover case 22, which partly covers the base plate 21 and accommodates the wheel 3 inside, and a columnar boss 23, the axial center of which is in the location of the center of the rotation of the wheel 3, is fixed in a near-center location of the base plate 21.

The outer plane of the wheel 3 abuts the base plate 21, and a round side-wall part 31, in which an axis support part 32 with the boss 23 is formed on the center location, and a wire winding part 33, which is provided to erect from the round side-wall part 31 in a cylindrical shape, are formed.

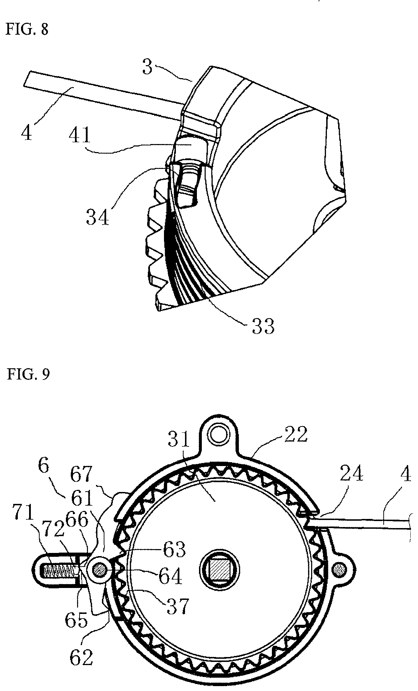

The wire 4 is structured so that a head part 41 to have a larger diameter than the wire diameter is formed at one end, the head part 41 of the wire 4 is fixed in a fixing part for the wire 4, formed on an end part of the wire winding part 33 of the wheel 3 and having a groove 34 of a width in which the wire 4 can be inserted and the head part 41 has difficulty being inserted, as shown in FIG. 8, and the other end of the wire 4 wound around the wheel 3 is configured to be drawn out from a wire release opening 24, which is formed on a side plane of the cover case, and, in the other end of the wire 4, a connecting part to connect with a component of the tire slip prevention body 110 is provided.

An inner space for arranging a spiral spring 51 is formed on the inner circumferential plane of the wire winding part 33 of the wheel 3, one end of the spiral spring 51 arranged in the inner space of the wheel 3 locks in a groove part 36 formed on the inner circumferential plane of the wheel 3, the other end of the spiral spring 51 locks in the groove part 25 formed on the boss 23, and the wheel 3 is configured to rotate in the direction to wind the wire 4 by the restoring force of the spiral spring 51.

The control mechanism 6 has a first locking tooth 62, which engages with a plurality of tooth parts 37 formed around a round side-wall part 31 of the wheel 3 and prevents the wheel 3 from rotating in the direction to release the wire 4, a second locking tooth 63, which engages with the tooth parts 37 and prevents the wheel 3 from rotating in the direction to wind the wire 4, and a biasing means 7, which applies bias to the locking tooth, which is either one of the first locking tooth 62 and the second locking tooth 63, towards the tooth parts 37 formed on the wheel 3.

The control mechanism 6 has a movable piece 61, in which the first locking tooth 62 is arranged at one end of one side plane and the second locking tooth 63 is formed at the other end of the one side plane, and, in this movable piece 61, an axis support part 64, comprised of an aperture in which a screw 26 to fix the base plate 21 and the cover case 22 can be inserted, is formed in a location between the first locking tooth 62 and the second locking tooth 63, and an abutting part 65 with the biasing means 7 is formed on the other side plane, and the abutting part 65, formed on the other side plane of the movable piece 61, has a closest point of approach 66, which approaches the closest to the biasing means 7, formed in a location between the first locking tooth 62 and the second locking tooth 63.

The control mechanism 6 has a manual operation part 67, which is formed to extend from the second locking tooth 63 side in the movable piece 61, and this manual operation part 67 is formed to stick out from a side plane of the cover case 22 so as to allow push-in operation. Note that, instead of structuring the manual operation part 67 of the control mechanism 6 integrally with the movable piece 61, it is equally possible to configure the movable piece to assume rotating motion in conjunction with the operation of a manual operation part that is formed as a separate entity (not shown).

In the biasing means 7, a coil spring 71 is arranged in a nearly vertical direction with respect to the axis of rotation of the movable piece 61, and the direction of rotation of the movable piece 61 is configured so that the location where the coil spring 71 applies bias to the movable piece 61 switches back to the opposite direction at the closest point of approach 66 as a border. Note that, in the coil spring 71, a spherical sliding member 72 is arranged in the part abutting the movable piece 61.

Furthermore, the location of the closest point of approach 66 of the abutting part 65 that is formed on the other side plane of the movable piece 61 is formed in a location that is shifted more towards the first locking tooth 62 than the location of the axis support part 32.

The control mechanism 6 is structured so that, when the first locking tooth 62 engages with the tooth parts 37 formed on the wheel 3, the state the second locking tooth 63 is engaged is cancelled, and, when the second locking tooth 63 engages with the tooth parts 37, the state the first locking tooth 62 is engaged is cancelled, and, furthermore, has an intermediate rotation location of the movable piece 61, where the state neither the first locking tooth 62 nor the second locking tooth 63 is engaged with the tooth parts 37 formed on the wheel is assumed.

Then, a first motion for switching from the state in which the second locking tooth 63 is engaged with the tooth parts 37 formed on the wheel 3 to the state in which the first locking tooth 62 is engaged is designed to be carried out by the motion to draw out the wire 4 wound around the wire tensioning device 1, a second motion for switching from the state in which the first locking tooth 62 is engaged with the tooth parts 37 formed on the wheel 3 to the state no engaging tooth, neither the first engaging tooth 62 nor the second locking tooth 63, is engaged, is designed to be carried out in the state in which the operation to move the manual operation part 67 sticking out from the cover case 22 of the wire tensioning device 1 is maintained. A third motion for switching from the state in which no engaging tooth, neither the first engaging tooth 62 nor the second locking tooth 63, is engaged with the tooth parts 37 formed on the wheel 3, to the state in which the second locking tooth 63 is engaged, is designed to be carried out by push-in operation of the manual operation part 67 of the wire tensioning device 1 that sticks out from the cover case 22.

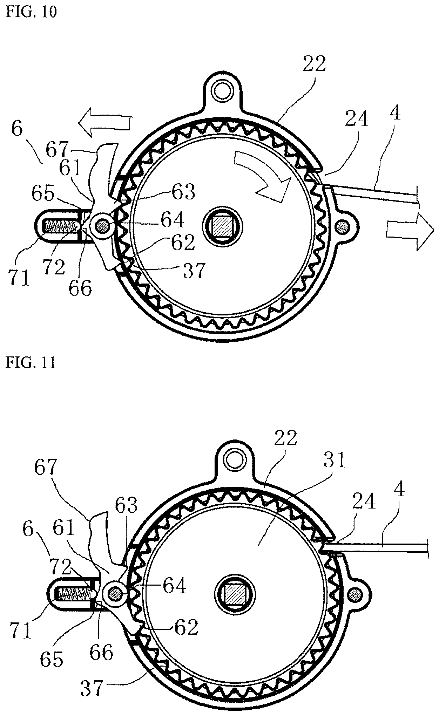

To describe the first motion, as shown in FIG. 9, a structure is provided in which, when the state is assumed in which the second locking tooth 63 is engaged with the tooth parts 37 formed on the wheel 3, the location where the biasing means 7 applies bias to the movable piece 61 is located closer to the first locking tooth 62 than the closest point of approach 66, and, when the motion to draw out the wire 4 is conducted by way of the first motion and the rotating motion of the wheel 3 starts, as shown in FIG. 10, the tooth parts 37 formed on the wheel 3 push out the second locking tooth 63 to allow the movable piece 61 to rotate, the location where the biasing means 7 applies bias to the movable piece 61 moves closer to the second locking tooth 63 than the closest point of approach 66, and, by means of the biasing means 7, the above state switches to the state in which the first locking tooth 62 is engaged with the tooth parts 37 formed on the wheel 3, as shown in FIG. 11.

Consequently, in the state in which the second locking tooth 63 is engaged with the tooth parts 37 formed on the wheel 3, if the motion to draw out the wire 4 is made after the task of placing the tire slip prevention body 110 on the tire 100 is performed, the state in which the second locking tooth 63 is engaged with the tooth parts 37 is cancelled, and switches to the state to wind the wire 4 in the wire tensioning device 1, so that the wheel rotates in the wire-winding direction by means of the winding biasing means 5 arranged inside the wheel 3 and fastens the wire of the tire slip prevention body 110 placed on the tire 100, allowing close contact with the tire 100.

In this state, the wheel 3 is prevented from rotating in the direction to release the wire 4 by the first locking tooth 62, and, since a structured is employed in which, although the tooth parts 37 formed on the wheel 3 push out the first locking tooth 62 and allow the movable piece 61 to rotate when the wheel 3 rotates in the wire-winding direction, and in which, with respect to the location where the biasing means 7 applies bias to the movable piece 61, the state to apply bias to a location that is closer to the second locking tooth 63 than the closest point of approach 66 is maintained, when the wheel 3 rotates in the winding direction, the state in which the first locking tooth 62 is engaged with the tooth parts 37 is maintained by the biasing means 7.

By means of this structure, even when the state in which the second locking tooth is engaged with the tooth parts 37 is temporarily assumed due to operation errors, tampering and malfunction of the operation part, at the moment the wire 4 is drawn out by centrifugal force during drive, this state switches to the state in which the first locking tooth 62 is engaged with the tooth parts 37, and the state in which the wire 4 can be drawn out is terminated, and it is possible to switch to the fastening state, in which the wire 4 is wound around the wheel 3 by means of the restoring force of the spiral spring 51.

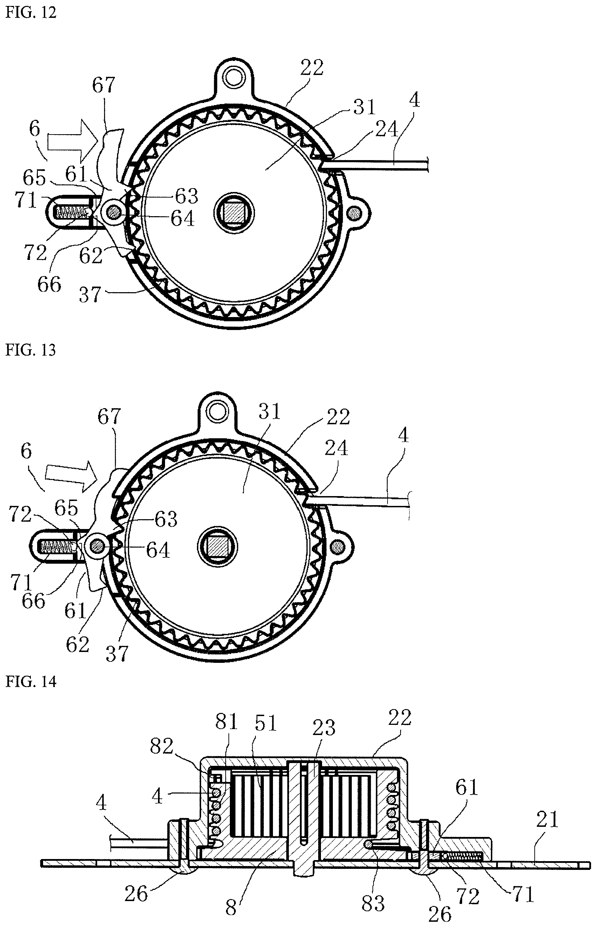

To describe the second motion, the state in which the manual operation part 67 to allow push-in operation is half-pushed from the state by the above first motion where the first locking tooth 62 is engaged with the tooth parts 37 is maintained, and, as shown in FIG. 12, the state in which the movable piece 61 is rotated up to the state where neither the first locking tooth 62 nor the second locking tooth 63 is engaged with the tooth parts 37 formed on the wheel 3 is maintained, so that it is possible to perform the operation to draw out a certain length of the wire 4.

The location of the closest point of approach 66 of the abutting part 65, formed on the other side plane of the movable piece 61, is formed in a location that is shifted closer toward the first locking tooth 62 than the location of the axis support part 64, so that a structure is assumed in which the location, where the biasing means 7 applies bias to the movable piece 61, maintains the state of applying bias to a location that is closer to the second locking tooth 63 than the closest point of approach 66, resulting in a structure in which, if the state of the manual operation part 67 being pushed is cancelled, the state in which the wheel 3 rotates in the winding direction is resumed. Note that it is also possible to provide a movable piece lock mechanism (not shown) that can maintain the state provided by the second motion even when the hand is detached from the manual operation part 67.

To describe the third motion, if the manual operation part 67 is pushed in deeper from the state provided by the above second motion where the manual operation part 67 is half-pushed, a structure is changed to the state that the location where the biasing means 7 applies bias to the movable piece 61 moves closer to the first locking tooth 62 than the closest point of approach 66 due to the rotating motion of the movable piece 61, and then, as shown in FIG. 13, the biasing means 7 makes a switch to the state in which the second locking tooth 63 engages with the tooth parts 37 formed on the wheel 3.

Since the state in which the wire 4 is not wound up around the wheel 3 can be maintained by the third motion, by carrying out the third motion after the wire 4 is drawn out from the wire tensioning device 1 in the second motion, it is possible to perform the task of placing the tire slip prevention body 110 on the tire 100 or the task of removing the tire slip prevention body 110 from the tire 100 with both hands.

### [Embodiment 2]

With a second embodiment of the tire slip prevention wire tensioning device of the present invention, the structure of above first embodiment is re-structured so that the outer diameter of the wire winding part of the wheel 8 becomes a winding part of a smaller diameter in the final part of the wire winding state than in the part where the wire starts being wound.

As shown in FIG. 14, the present embodiment is structured so that a helical groove 81 is formed on the wire winding part of the wheel 8 and the wire 4 is wound in the helical groove 81 from the end-part fixing part 82 of the wire 4 in order, and the outer diameter of the winding part of the wire 4 is formed to become a smaller-diameter part 83 in the final location of the winding state than in the part where the wire 4 starts being wound.

Note that, as a variation of the second embodiment, a structure may be provided which, as shown in FIG. 15, divides the wire winding part of the wheel 9 into at least two, namely the wind-starting part 91 and the wind-finishing part 92, which moves the wire winding location to the wind-finishing part 92 in the stage in which the amount of wire wound around the wind-starting part 91 increases. By means of this structure, the outer diameter of the winding part becomes small in the stage the wire winding location moves to the wind-finishing part 92, so that it is possible to increase the winding torque of the wire 4.

Note that, in the variation of the second embodiment, the means to switch the wire winding location from the wind-starting part 91 to the wind-finishing part 92 is preferably structured so that, when the end part of the wire 4 is fixed to the winding location of the wind-starting part 91 and the amount of wire wound in the wind-starting part 91 becomes full, the wire 4 slides sideways and the winding location of the wire 4 automatically switches to the wind-finishing part 92, and it is equally possible to provide a structure which provides a wire guide that moves in accordance with the rotation of the wheel 9, and by which the guiding location of the wire 4 switches to the location in the wind-finishing part 92 upon reaching the stage the amount of wire wound in the wind-starting part 91 increases (not shown).

By means of the structure of the second embodiment, it is possible to increase the wire-winding torque of the wire tensioning device 1 in the final stage of wire winding, thus bringing about an advantage of increasing the wire tension when placing the tire slip prevention body 110 in close contact with the tire 100.

### Industrial Applicability

The present invention allows effective industrial use as a tire slip prevention wire tensioning device.

### Reference Signs and Numerals

1: Wire tensioning device
2: Case
3: Wheel
4: Wire
5: Winding biasing means
6: Control mechanism
7: Biasing means
8: Wheel
9: Wheel
21: Base plate
22: Cover case
23: Boss
24: Wire-release opening
25: Groove part
26: Screw
31: Round side-wall part
32: Axis support part
33: Wire winding part
34: Groove
36: Groove part
37: Tooth part
41: Head part
51: Spiral spring
61: Movable piece
62: First locking tooth
63: Second locking tooth
64: Axis support part
65: Abutting part
66: Closest point of approach
67: Manual operation part
71: Coil spring
72: Sliding member
81: Helical groove
82: End-part fixing part
83: Small-diameter part
91: Wind-starting part
92: Wind-finishing part
93: End-part fixing part
100: Tire
110: Tire slip prevention body

## Claims

1. A wire tensioning device to allow a slip prevention body to closely fit a vehicle tire, the slip prevention body being placed on the tire along an outer circumference of the tire, comprising:
a case;
a wheel (3), which is supported about an axis in the case (2) and which can wind up a wire (4);
the wire, one end of which is fixed to the wheel;
a winding biasing means (5), which applies bias to the wheel in a direction to wind the wire; and
a control mechanism (6), which controls rotating motion of the wheel, wherein the control mechanism comprises:
a plurality of tooth parts (37), which are formed on the wheel;
a first locking tooth (62), which engages with the tooth parts and prevents the wheel from rotating in a direction to release the wire;
a second locking tooth (63), which engages with the tooth parts and prevents the wheel from rotating in the direction to wind the wire;
biasing means (7), which applies bias to a locking tooth, which is at least one of the first locking tooth or the second locking tooth, towards the tooth parts formed on the wheel,
the control mechanism being further structured so that:
when the first locking tooth engages with the tooth parts formed on the wheel, the state in which the second locking tooth is engaged is cancelled;
when the second locking tooth engages with the tooth parts, the state in which the first locking tooth is engaged is cancelled;
a first motion for switching from the state in which the second locking tooth is engaged with the tooth parts formed on the wheel to the state in which the first locking tooth is engaged is carried out by a motion to draw out the wire wound around the wheel;
a movable piece (61), in which the first locking tooth is arranged at one end of one side plane and the second locking tooth is formed at the other end of the one side;
an axis support part (64) with the case being formed on the movable piece in a location between the first locking tooth and the second locking tooth;
an abutting part (65) with the biasing means being further formed on the other side plane of the movable piece; and
a closest point of approach (66), which approaches the closest to the biasing means, being formed on the abutting part formed on the other side plane of the movable piece, in a location between the first locking tooth and the second locking tooth,
wherein a manual operation part is provided in the movable piece to be closer to the second locking tooth; and
the location of the closest point of approach of the abutting part formed on the other side plane of the movable piece is formed in a location that is shifted more towards the first locking tooth than the location of the axis support part.

2. The tire slip prevention wire tensioning device of claim 1, wherein
a second motion for switching from the state in which the first locking tooth is engaged with the tooth parts formed on the wheel to the state in which no locking tooth, neither the first locking tooth nor the second locking tooth, is engaged can be carried out by operating a manual operation part that sticks out from the case of the wire tensioning device.

3. The tire slip prevention wire tensioning device of claim 2, wherein
a third motion for switching from the state in which no locking tooth, neither the first locking tooth nor the second locking tooth, is engaged with the tooth parts formed on the wheel to the state in which the second locking tooth is engaged can be carried out by operating the manual operation part that sticks out from the case of the wire tensioning device.

4. The tire slip prevention wire tensioning device of any of claims 1, 2, and 3, wherein
the biasing means is structured so that an elastic member is arranged in a nearly vertical direction with respect to an axis of rotation of the movable piece, and
the direction of rotation of the movable piece switches to an opposite direction, at the closest point of approach of the location where the elastic member applies bias to the movable piece as a border.

5. The tire slip prevention wire tensioning device of claim 4, wherein
in the elastic member, a sliding member is arranged in the abutting part with the movable piece.

6. The tire slip prevention wire tensioning device according to any one of claims 1-5, wherein
the case is fixed to an outer end part of the tire slip prevention and a connecting part to connect with a component of the tire slip prevention is provided at the other end of the wire.

7. The tire slip prevention wire tensioning device of any one of claims1-6, wherein
a wire-winding torque of the wheel increases more in a state in which the amount of wire wound around the wheel is larger than in a state in which the amount of wire wound is smaller.

## Patentansprüche

1. Drahtspannvorrichtung zum Ermöglichen, dass ein Rutschverhinderungskörper eng an einen Fahrzeugreifen passt, wobei der Rutschverhinderungskörper an dem Reifen entlang eines Außenumfangs des Reifens platziert ist, umfassend:
ein Gehäuse;
ein Rad (3), das um eine Achse in dem Gehäuse getragen ist und das einen Draht (4) aufwickeln kann;
den Draht, dessen eines Ende an dem Rad fixiert ist;
eine Wicklungsvorspanneinrichtung (5), die in einer Richtung zum Wickeln des Drahts eine Vorspannung an das Rad anlegt; und
einen Steuermechanismus (6), der eine Drehbewegung des Rads steuert, wobei der Steuermechanismus umfasst:
eine Vielzahl von Zahnteilen (37), die an dem Rad gebildet sind;
einen ersten Verriegelungszahn (62), der mit den Zahnteilen in Eingriff steht und verhindert, dass sich das Rad in einer Richtung zum Freigeben des Drahts dreht;
einen zweiten Verriegelungszahn (63), der mit den Zahnteilen in Eingriff steht und verhindert, dass sich das Rad in der Richtung zum Wickeln des Drahts dreht;
eine Vorspanneinrichtung (7), die an einen Verriegelungszahn, welcher der erste Verriegelungszahn und/oder der zweite Verriegelungszahn ist, eine Vorspannung in Richtung der an dem Rad gebildeten Zahnteile anlegt,
wobei der Steuermechanismus ferner so strukturiert ist, dass:
wenn der erste Verriegelungszahn in Eingriff mit den an dem Rad gebildeten Zahnteilen steht, der Zustand, in dem der zweite Verriegelungszahn in Eingriff steht, aufgehoben ist;
wenn der zweite Verriegelungszahn in Eingriff mit den Zahnteilen steht, der Zustand, in dem der erste Verriegelungszahn in Eingriff steht, aufgehoben ist;
eine erste Bewegung zum Wechseln von dem Zustand, in dem der zweite Verriegelungszahn in Eingriff mit den an dem Rad gebildeten Zahnteilen steht, zu dem Zustand, in dem der erste Verriegelungszahn in Eingriff steht, durch eine Bewegung zum Ausziehen des um das Rad gewickelten Drahts ausgeführt wird;
ein bewegliches Stück (61), in dem der erste Verriegelungszahn an einem Ende einer Seitenebene angeordnet ist und der zweite Verriegelungszahn an dem anderen Ende der einen Seite gebildet ist;
ein Achsenträgerteil (64) mit dem Gehäuse, das an dem beweglichen Stück an einer Stelle zwischen dem ersten Verriegelungszahn und dem zweiten Verriegelungszahn gebildet ist;
ein an der Vorspanneinrichtung anliegendes Teil (65), das ferner an der anderen Seitenebene des beweglichen Stücks gebildet ist;
ein Punkt der dichtesten Annäherung (66), der sich der Vorspanneinrichtung am dichtesten annähert, und der an dem an der anderen Seitenebene des beweglichen Stücks gebildeten anliegenden Teil an einer Stelle zwischen dem ersten Verriegelungszahn und dem zweiten Verriegelungszahn gebildet ist,
ein Teil zur manuellen Bedienung in dem beweglichen Stück näher an dem zweiten Verriegelungszahn vorgesehen ist;
die Stelle des Punkts der dichtesten Annäherung des an der anderen Seitenebene des beweglichen Stücks gebildeten anliegenden Teils an einer Stelle gebildet ist, die mehr in Richtung des ersten Verriegelungszahns als der Stelle des Achsenträgerteils verschoben ist.

2. Drahtspannvorrichtung zur Reifenrutschverhinderung nach Anspruch 1, wobei
eine zweite Bewegung zum Wechseln von dem Zustand, in dem der erste Verriegelungszahn mit den an dem Rad gebildeten Zahnteilen in Eingriff steht, zu dem Zustand, in dem kein eingreifender Zahn, weder der erste Verriegelungszahn noch der zweite Verriegelungszahn, in Eingriff steht, durch Betätigen eines Teils zur manuellen Bedienung ausgeführt werden kann, das von dem Gehäuse der Drahtspannvorrichtung herausragt.

3. Drahtspannvorrichtung zur Reifenrutschverhinderung nach Anspruch 2, wobei
eine dritte Bewegung zum Wechseln von dem Zustand, in dem kein eingreifender Zahn, weder der erste Verriegelungszahn noch der zweite Verriegelungszahn, mit den an dem Rad gebildeten Zahnteilen in Eingriff steht, zu dem Zustand, in dem der zweite Verriegelungszahn in Eingriff steht, durch Betätigen des Teils zur manuellen Bedienung ausgeführt werden kann, das von dem Gehäuse der Drahtspannvorrichtung herausragt.

4. Drahtspannvorrichtung zur Reifenrutschverhinderung nach einem der Ansprüche 1, 2 und 3, wobei
die Vorspanneinrichtung so strukturiert ist, dass ein elastisches Element in einer nahezu vertikalen Richtung bezüglich einer Drehachse des beweglichen Stücks angeordnet ist, und
die Drehrichtung des beweglichen Stücks an dem Punkt der dichtesten Annäherung der Stelle, wo das elastische Element eine Vorspannung an das bewegliche Stück anlegt, als Grenze in eine entgegengesetzte Richtung wechselt.

5. Drahtspannvorrichtung zur Reifenrutschverhinderung nach Anspruch 4, wobei in dem elastischen Element ein Gleitelement in dem an das bewegliche Stück angrenzenden Teil angeordnet ist.

6. Drahtspannvorrichtung zur Reifenrutschverhinderung nach einem der Ansprüche 1 - 5, wobei
das Gehäuse an einem äußeren Endteil zur Reifenrutschverhinderung fixiert ist und ein Verbindungsteil zum Verbinden mit einer Komponente zur Reifenrutschverhinderung an dem anderen Ende des Drahts vorgesehen ist.

7. Drahtspannvorrichtung zur Reifenrutschverhinderung nach einem der Ansprüche 1-6, wobei ein Drahtwicklungsdrehmoment des Rads in einem Zustand, in dem die um das Rad herum gewickelte Drahtmenge größer ist, mehr zunimmt als in einem Zustand, in dem die Drahtmenge kleiner ist.

## Revendications

1. Dispositif de mise en tension de câble destiné à permettre à un appareillage antidérapant de s'ajuster étroitement à un pneu de véhicule, l'appareillage antidérapant étant placé sur le pneu le long d'une circonférence extérieure du pneu, comprenant :
un étui;
une roue (3), qui est supportée autour d'un axe de l'étui (2) et qui peut enrouler un câble (4) ;
le câble, dont une extrémité est fixée à la roue ;
un moyen d'application d'effort d'enroulement (5), qui applique un effort à la roue dans une direction pour enrouler le câble ; et
un mécanisme de commande (6), qui commande un mouvement de rotation de la roue, dans lequel
le mécanisme de commande comprend :
une pluralité de parties dent (37), qui sont formées sur la roue ;
une première dent de verrouillage (62), qui vient en prise avec les parties dent et qui empêche la roue de tourner dans une direction pour libérer le câble;
une deuxième dent de verrouillage (63), qui vient en prise avec les parties dent et qui empêche la roue de tourner dans la direction pour enrouler le câble;
un moyen d'application d'effort (7), qui applique un effort à une dent de verrouillage, qui est au moins une parmi la première dent de verrouillage ou la deuxième dent de verrouillage, en direction des parties dent formées sur la roue,
le mécanisme de commande étant en outre structuré de sorte que :
lorsque la première dent de verrouillage vient en prise avec les parties dent formées sur la roue, l'état dans lequel la deuxième dent de verrouillage est mise en prise est annulé;
lorsque la deuxième dent de verrouillage vient en prise avec les parties dent, l'état dans lequel la première dent de verrouillage est mise en prise est annulé;
un premier mouvement, permettant de passer de l'état dans lequel la deuxième dent de verrouillage est en prise avec les parties dent formées sur la roue à l'état dans lequel la première dent de verrouillage est en prise, est mis en oeuvre grâce à un mouvement de traction du câble enroulé autour de la roue ;
une pièce mobile (61), au sein de laquelle la première dent de verrouillage est agencée au niveau d'une extrémité d'un plan latéral et la deuxième dent de verrouillage est formée au niveau de l'autre extrémité du même côté;
une partie support d'axe (64) appartenant à l'étui étant formée sur la pièce mobile à un endroit situé entre la première dent de verrouillage et la deuxième dent de verrouillage;
une partie en about (65) appartenant au moyen d'application d'effort étant en outre formée sur l'autre plan latéral de la pièce mobile; et
un point d'approche au plus près (66), qui s'approche au plus près du moyen d'application d'effort, étant formé sur la partie en about formée sur l'autre plan latéral de la pièce mobile, à un endroit situé entre la première dent de verrouillage et la deuxième dent de verrouillage,
dans lequel la partie fonctionnement manuel est fournie dans la pièce mobile de manière à être plus proche de la deuxième dent de verrouillage; et
l'emplacement du point d'approche au plus près de la partie en about formée sur l'autre plan latéral de la pièce mobile est formé à un endroit qui est davantage décalé en direction de la première dent de verrouillage que l'emplacement de la partie support d'axe.

2. Dispositif de mise en tension de câble antidérapant pour pneu selon la revendication 1, dans lequel
un deuxième mouvement, permettant de passer de l'état dans lequel la première dent de verrouillage est en prise avec les parties dent formées sur la roue à l'état dans lequel aucune dent de verrouillage, à savoir ni la première dent de verrouillage ni la deuxième dent de verrouillage, n'est en prise, peut être mis en oeuvre grâce à une étape consistant à faire fonctionner une partie fonctionnement manuel qui dépasse de l'étui du dispositif de mise en tension de câble.

3. Dispositif de mise en tension de câble antidérapant pour pneu selon la revendication 2, dans lequel
un troisième mouvement, permettant de passer de l'état dans lequel aucune dent de verrouillage, à savoir ni la première dent de mise en prise ni la deuxième dent de verrouillage, n'est en prise avec les parties dent formées sur la roue à l'état dans lequel la deuxième dent de verrouillage est en prise, peut être mis en oeuvre grâce à l'étape consistant à faire fonctionner la partie fonctionnement manuel qui dépasse de l'étui du dispositif de mise en tension de câble.

4. Dispositif de mise en tension de câble antidérapant pour pneu selon l'une quelconque des revendications 1, 2, et 3, dans lequel
le moyen d'application d'effort est structuré de sorte qu'un élément élastique est agencé dans une direction proche de la verticale par rapport à un axe de rotation de la pièce mobile, et
la direction de rotation de la pièce mobile change pour une direction opposée, au niveau du point d'approche au plus près de l'emplacement où l'élément élastique applique un effort sur la pièce mobile, qui fait office de limite.

5. Dispositif de mise en tension de câble antidérapant pour pneu selon la revendication 4, dans lequel
dans l'élément élastique, un élément coulissant est agencé dans la partie en about appartenant à la pièce mobile.

6. Dispositif de mise en tension de câble antidérapant pour pneu selon l'une quelconque des revendications 1 à 5, dans lequel
l'étui est fixé à une partie extrémité extérieure de l'antidérapant pour pneu et une partie raccordement à raccorder à un composant de l'antidérapant pour pneu est fournie au niveau de l'autre extrémité du câble.

7. Dispositif de mise en tension de câble antidérapant pour pneu selon l'une quelconque des revendications 1 à 6, dans lequel
un couple d'enroulement de câble de la roue augmente davantage dans un état dans lequel la quantité d'enroulement de câble autour de la roue est supérieure par rapport à un état dans lequel la quantité d'enroulement de câble est inférieure.
